# EUROPEAN PATENT APPLICATION

(11) **EP 2 557 361 A2**
(43) Date of publication of application: **13.02.2013**
(21) Application number: 12178923.4
(22) Date of filing: 01.08.2012
(51) Int. Cl.: F23N 5/08, F23N 5/02, F23R 3/28

(54) **System and method for monitoring a combustor**

(30) Priority: 08.08.2011 US 201113204796
(71) Applicant: General Electric Company, Schenectady, NY 12345 (US)
(72) Inventor: Krull, Anthony Wayne, Greenville, SC 12615 (US); Venkataraman, Krishna Kumar, Greenville, SC 29615 (US)
(74) Representative: Cleary, Fidelma

(57) **Abstract**

A combustor nozzle (40) includes a center body (42) that defines an axial centerline (48). A shroud (44) circumferentially surrounds at least a portion of the center body (42) to define an annular passage (50) between the center body (42) and the shroud (44). A plenum (54, 56) is inside the center body (42) and aligned substantially parallel to the axial centerline (48). A sensor extends inside the center body (42) and is generally adjacent to the plenum (54, 56), wherein the sensor (62) detects a condition proximate to the combustor nozzle (40). A method for monitoring a combustor includes flowing a fuel through a center body (42) axially aligned in a nozzle (40) and flowing a working fluid through an annular passage (50) substantially parallel to and radially outward of the center body (42). The method further includes sensing a condition inside the combustor using a sensor located inside the center body (42).

## Description

### FIELD OF THE INVENTION

The present invention generally involves a system and method for monitoring a combustor. In particular embodiments, a combustor nozzle may include a sensor to monitor one or more conditions in the combustor.

### BACKGROUND OF THE INVENTION

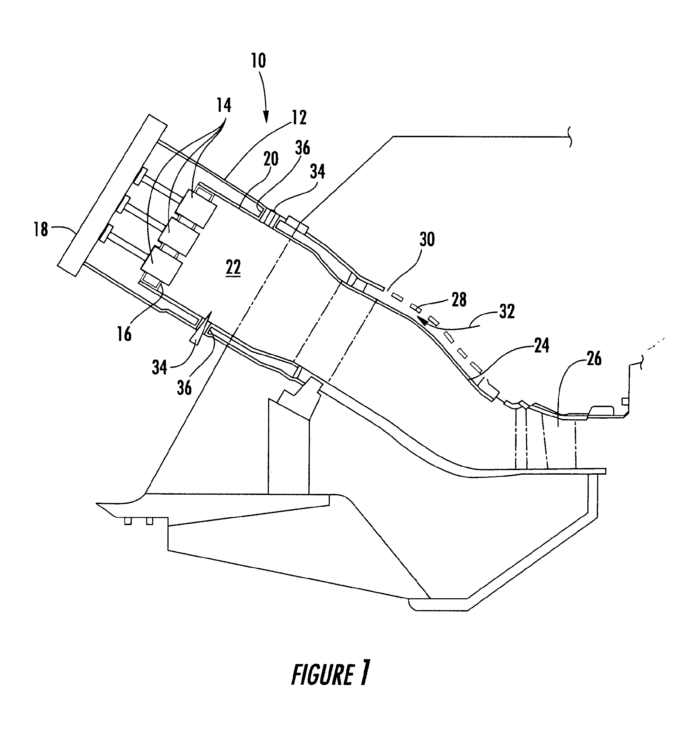

Gas turbines, aircraft engines, and numerous other combustion-based systems include one or more combustors that mix a working fluid such as air with fuel and ignite the fuel-air mixture to produce high temperature and pressure combustion gases. Figure 1 shows a simplified cross-section view of an exemplary combustor 10, such as might be included in a gas turbine. A casing 12 may surround the combustor 10 to contain a compressed working fluid flowing to the combustor 10, and the combustor 10 may include one or more nozzles 14 radially arranged between a top cap 16 and an end cover 18. The end cover 18 may include a plurality of tubes, manifolds, associated valves and the like (not shown) for feeding gaseous fuel, liquid fuel, air, and/or water through the nozzles 14. The top cap 16 and a liner 20 generally surround and define a combustion chamber 22 located downstream from the nozzles 14, and a transition piece 24 downstream from the liner 20 connects the combustion chamber 22 to a turbine inlet 26. An impingement sleeve 28 with flow holes 30 may surround the transition piece 24 to define an annular passage 32 between the impingement sleeve 28 and the transition piece 24. The compressed working fluid may pass through the flow holes 30 in the impingement sleeve 28 to flow through the annular passage 32 to provide convective cooling to the transition piece 24 and liner 20. When the compressed working fluid reaches the end cover 18, the compressed working fluid reverses direction to flow through the one or more nozzles 14 where it mixes with fuel before igniting in the combustion chamber 22 to produce combustion gases having a high temperature and pressure.

During the operation of the combustor 10, anomalies may occur that increase emissions of regulated combustion products, reduce combustor efficiency, and/or reduce the life of components within the combustor 10. For example, excessive flame temperatures within the combustor 10 may cause over-firing conditions, thereby resulting in damage to the combustion chamber 22 or downstream components. Additionally, excessive flame temperatures can lead to increased emissions and may necessitate increased cooling flow to the combustor 10, thereby reducing combustor efficiency. Similarly, lean blow-out (LBO) events, characterized by extinguished flames due to an air/fuel mixture that is too lean, increased emissions and also reduced combustor efficiency. Without adequate monitoring, the combustor 10 may not meet emissions standards, may suffer reduced longevity, and/or may operate at reduced efficiencies.

Various systems are known in the art for monitoring conditions in the combustor 10. For example, the combustor 10 may include one or more sensors 34 that detect and/or measure various conditions in the combustor 10, such as temperature, pressure, light, and virtually any other measurable operating parameter in the combustor 10. As shown in Figure 1, the sensors 34 may be installed in one or more ports 36 that pass through the casing 12 and/or liner 20 to allow the sensors 34 to access or detect conditions inside the combustion chamber 22. The location of the sensors 34 along the side of the combustion chamber 22 has several disadvantages. For example, the sensors 34 shown in Figure 1 each require a penetration through the casing 12 and/or liner 20 of the combustor 10, creating a potential source of leakage and/or turbulent flow through or around the penetration. In addition, sensors 34 located along the side of the combustor 10 necessarily interfere with the flow of the working fluid flowing along the outside of the liner 20, thereby increasing the differential pressure of the working fluid across the combustor 10 which decreases the overall efficiency of the gas turbine. Both of these disadvantages, as well as others associated with side-mounted sensors 34, reduce the amount and/or flow rate of working fluid available to mix with the fuel in the nozzles 14. The amount of working fluid available for premixing with fuel has a direct impact on the peak flame temperatures and NOx emissions.

More recent attempts have been made to incorporate sensors 34 into the breech end of the combustor 10 to reduce or eliminate any interference with the flow of the working fluid. However, the size and number of nozzles 14 located in the breech end of the combustor necessarily limits the surface area available for the sensors 34. As a result, an improved system and method for monitoring the combustor 10 that reduces or eliminates penetrations through the side of the combustor 10 and/or interference with the working fluid would be useful.

### BRIEF DESCRIPTION OF THE INVENTION

Aspects and advantages of the invention are set forth below in the following description, or may be obvious from the description, or may be learned through practice of the invention.

One aspect of the present invention is a combustor nozzle that includes a center body that defines an axial centerline. A shroud circumferentially surrounds at least a portion of the center body to defme an annular passage between the center body and the shroud. A plenum is inside the center body and aligned substantially parallel to the axial centerline. A sensor extends inside the center body and is generally adjacent to the plenum, wherein the sensor detects a condition proximate to the combustor nozzle.

Another aspect of the present invention is a combustor that includes an end cap and a plurality of nozzles radially disposed in the end cap, at least one of the plurality of nozzles as described above.

The present invention also resides in a method for monitoring a combustor. The method includes flowing a fuel through a center body axially aligned in a nozzle and flowing a working fluid through an annular passage substantially parallel to and radially outward of the center body. The method further includes sensing a condition inside the combustor using a sensor located inside the center body.

Those of ordinary skill in the art will better appreciate the features and aspects of such embodiments, and others, upon review of the specification.

### BRIEF DESCRIPTION OF THE DRAWINGS

Embodiments of the present invention will now be described, by way of example only, with reference to the accompanying drawings in which:
Figure 1 is a simplified side cross-section view of an exemplary combustor;
Figure 2 is a perspective view of a nozzle according to one embodiment of the present invention;
Figure 3 is an enlarged perspective view of a portion of the nozzle shown in Figure 2;
Figure 4 is a simplified side cross-section view of a combustor according to one embodiment of the present invention; and
Figure 5 is a simplified axial cross-section view of the combustor shown in Figure 4 according to one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Various embodiments of the present invention include a system and/or method for monitoring conditions inside a combustor. For example, some embodiments may include a nozzle having a sensor inside the nozzle that is generally aligned with an axial centerline of the nozzle. Alternate embodiments may incorporate a plurality of nozzles into the combustor, with one or more of the nozzles having the sensor. In this manner, the various embodiments of the present invention enable reliable monitoring of conditions in the combustor without requiring additional penetrations through the side of the combustor that may interfere with fluid flow around or through the combustor.

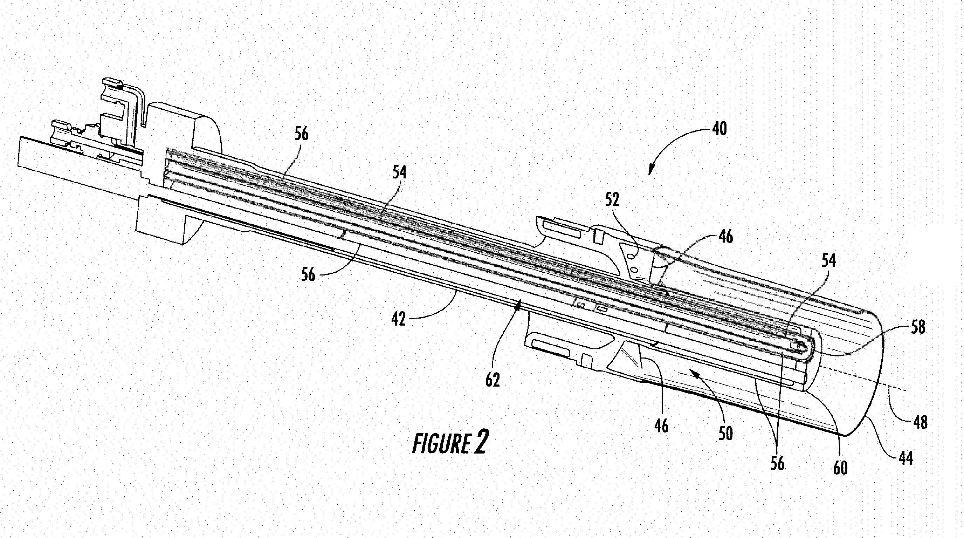

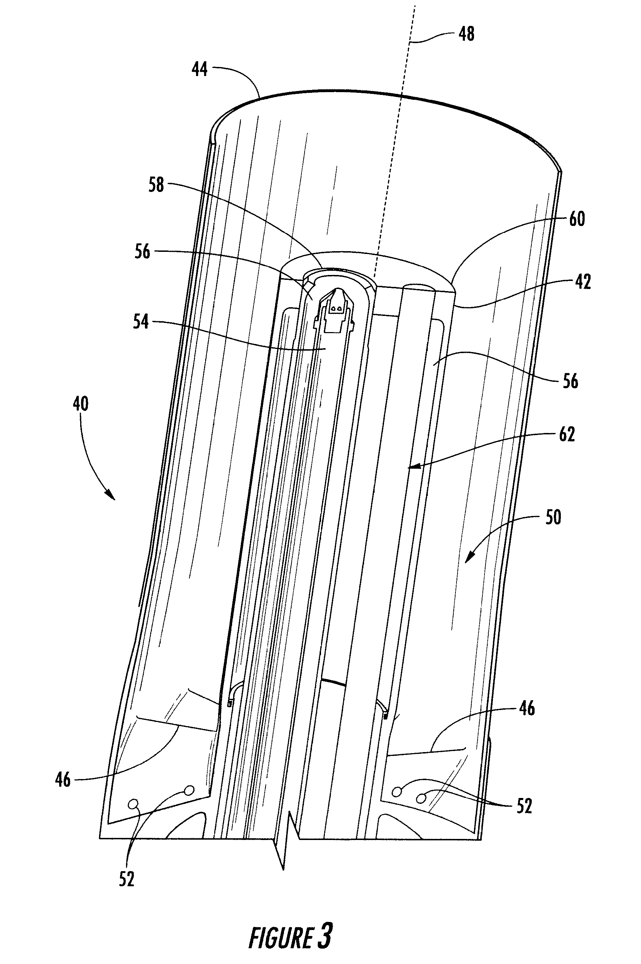

Figure 2 is a perspective view of a nozzle 40 according to one embodiment of the present invention, and Figure 3 is an enlarged perspective view of a portion of the nozzle 40 shown in Figure 2. As shown in Figures 2 and 3, the nozzle 40 generally comprises a center body 42, a shroud 44, and a plurality of the vanes 46. The center body 42 is centrally located in the nozzle 40 and generally extends along the length of the nozzle 40 to defme an axial centerline 48 of the nozzle 40. The shroud 44 circumferentially surrounds the majority or at least a portion of the center body 42, as shown in Figure 2, to define an annular passage 50 between the center body 42 and the shroud 44. The annular passage 50 may be substantially parallel to the center body 42, for example as shown in Figures 2 and 3. The vanes 46 generally extend radially in the annular passage 50 between the center body 42 and the shroud 44, and fuel may be supplied from the center body 42 and/or the shroud 44 through fuel ports 52 in the vanes 46. In particular embodiments, the vanes 46 may be curved or angled with respect to the axial centerline 48, as shown in Figures 2 and 3, to impart a tangential velocity to working fluid and/or fuel flowing across the vanes 46 to enhance mixing between the working fluid and the fuel in the annular passage 50 prior to combustion.

One or more plenums may extend axially inside the center body 42 to provide fluid communication to and/or through the center body 42. For example, as shown in Figures 2 and 3, a fuel plenum 54 and one or more diluent plenums 56 may extend along the length of and/or through the center body 42. The fuel may comprise a liquid or a gaseous fuel, and the diluent may comprise working fluid, water, steam, an inert gas, or another fluid suitable for diluting the fuel and/or removing heat from the center body 42. The fuel and diluent plenums 54, 56 may terminate at an opening 58 at a downstream surface 60 of the nozzle 40, thus providing fluid communication for a gaseous fuel, liquid fuel, or diluent to flow into and through the center body 42. Alternately, or in addition, the diluent plenum 56 may terminate proximate to the downstream surface 60 of the center body 42, thus providing fluid communication for the diluent to flow into the center body 42 and provide impingement cooling to the downstream surface 60 of the center body 42. The fuel and diluent plenums 54, 56 may be concentric with the axial centerline 48 of the nozzle 40, or, as shown in Figures 2 and 3, the fuel and diluent plenums 54, 56 may be aligned with and radially offset from the axial centerline 48.

As shown in Figures 2 and 3, the nozzle 40 may further include a sensor 62 inside and/or within a circumferential perimeter of the center body 42 and extending axially through the center body 42. The sensor 62 may comprise, for example, a temperature sensor, a pressure sensor, a light sensor, a flame detector, or any suitable device known to one of ordinary skill in the art for detecting and/or measuring conditions in the combustor 10. As shown most clearly in Figure 2, the sensor 62 may be inserted through the breech end of the nozzle 40 to facilitate installation, maintenance, and replacement of the sensor 62. Specifically, by breech-loading the sensor 62 within the nozzle 40, the entire sensor 62 may be quickly and easily installed and/or removed from the nozzle 40. As such, the time and costs required to install, repair, and/or replace the sensor 62 may be significantly reduced. For example, in several embodiments, the sensor 62 may be installed and/or removed without accessing the interior of the combustor, such as by installing the sensor 62 through the end cover 18 of the combustor. Additionally, by breech-loading the sensor 62 within the nozzle 40, the leakage and wear issues associated with the side-mounted sensors 34 shown in Figure 1 may be avoided.

As with the fuel and diluent plenums 54, 56, the sensor 62 may be concentric with or radially offset from the axial centerline 48. In addition, the sensor 62 may terminate proximate to the opening 58 in the downstream surface 60 of the center body 42 so that the sensor 62 is proximate to the fuel plenum 54 and/or diluent plenums 56 at the downstream surface 60 of the center body 42.

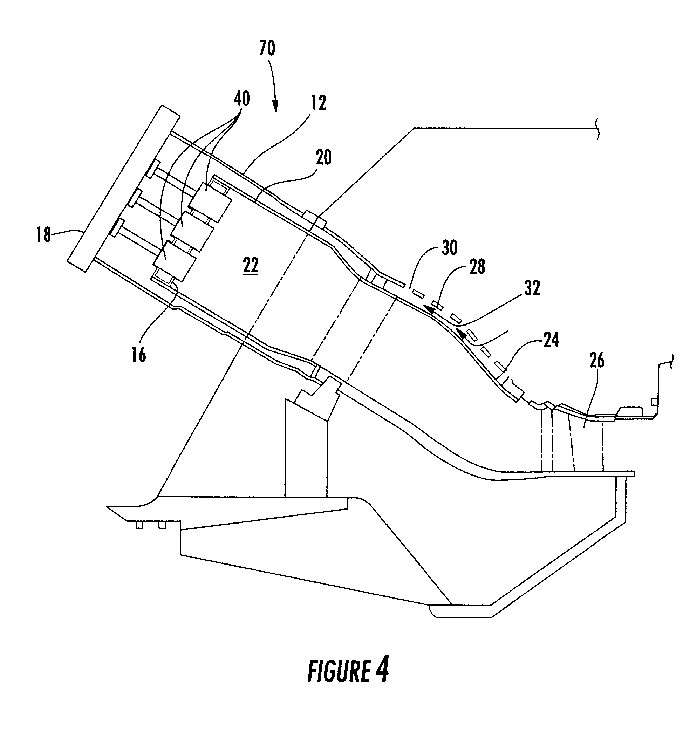

Figure 4 provides a simplified side cross-section view of a combustor 70 according to one embodiment of the present invention incorporating the nozzle 40 shown in Figures 2 and 3. As shown, the combustor 70 generally includes the same components and the working fluid flows along the same path as previously described with respect to the exemplary combustor 10 shown in Figure 1. Specifically, the working fluid may pass through the flow holes 30 in the impingement sleeve 28 to flow through the annular passage 32 to provide convective cooling to the transition piece 24 and liner 20. When the working fluid reaches the end cover 18, the fluid reverses direction to flow through the one or more nozzles 40 where it mixes with fuel before igniting in the combustion chamber 22 to produce combustion gases having a high temperature and pressure.

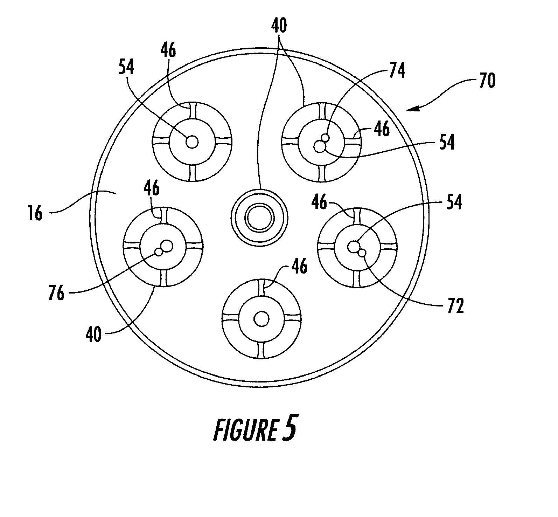

As seen in Figure 4, however, the combustor 70 no longer requires the side-mounted sensors 34 and passages 36 shown in Figure 1. Instead, as shown in the axial view of the combustor 70 shown in Figure 5, the sensors 62 have been incorporated into one or more of the nozzles 40 radially arranged or disposed in the end cap 16. As shown in Figure 5, multiple nozzles 40 may surround a single nozzle 40, and the nozzles 40 may have various diameters depending on the particular embodiment. Figure 5 further illustrates that the type, number, and relative location of the sensors 62 with respect to the fuel plenum 54 may vary according to particular embodiments. For example, as shown in Figure 5, the combustor 70 may include a temperature sensor 72 in one nozzle 40, a pressure sensor 74 in a second nozzle 40, and a flame detector 76 in a third nozzle 40. In this manner, the embodiments shown in Figures 2-5 thus provide a reliable system and method for monitoring conditions in the combustor 70 without requiring penetrations through the casing 12 and/or liner 20. As a result, common disadvantages associated with casing 12 and/or liner 20 penetrations, such as leakage, wear, increased maintenance, and flow resistance, are reduced or avoided completely.

The embodiments shown and described with respect to Figures 2-5 may further provide a method for monitoring the combustor 70. The method may include flowing liquid or gaseous fuel through the center body 42 axially aligned in the nozzle 40 and flowing the working fluid through the annular passage 50. The method may further include sensing a condition inside the combustor 70 using the sensor 62 located in the center body 42. In particular embodiments, the method may sense a temperature, pressure, or flame condition inside the combustor 70 using the sensor 62 located inside the center body 42.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal languages of the claims.

## Claims

1. A combustor nozzle (40), comprising:
a. a center body (42), wherein the center body (42) defines an axial centerline (48);
b. a shroud (44) circumferentially surrounding at least a portion of the center body (42) to defme an annular passage (50) between the center body (42) and the shroud (44);
c. a plenum (54, 56) inside the center body (42) and aligned substantially parallel to the axial centerline (48); and
d. a sensor (62) extending inside the center body (42) and generally adjacent to the plenum (54, 56) wherein the sensor (62) detects a condition proximate to the combustor nozzle (40).

2. The combustor nozzle (40) as in claim 1, wherein the annular passage (50) is substantially parallel to the center body (42).

3. The combustor nozzle (40) as in claim 1 or 2, wherein the plenum (54, 56) provides fluid communication for a liquid fuel through the center body (42).

4. The combustor nozzle (40) as in any of claims 1 to 3, wherein the plenum (54, 56) provides fluid communication for a diluent through the center body (42).

5. The combustor nozzle (40) as in any preceding claim, wherein the sensor (62) comprises at least one of a temperature sensor (72), a pressure sensor (74), or a flame detector (76).

6. The combustor nozzle (40) as in any preceding claim, wherein the plenum (54, 56) is disposed radially outward from the axial centerline (48).

7. The combustor nozzle (40) as in any preceding claim, wherein the sensor (62) is disposed radially outward from the axial centerline (48).

8. The combustor nozzle (40) as in any preceding claim, further comprising a plurality of vanes (46) in the annular passage (50) between the shroud (44) and the center body (42).

9. A combustor comprising:
a. an end cap
b. a plurality of nozzle radially disposed in the end cap, at least one of the plurality of nozzles as recited in any of claims 1 to 8.

10. A method for monitoring a combustor (70) comprising:
a. flowing a fuel through a center body (42) axially aligned in a nozzle (40);
b. flowing a working fluid through an annular passage (50), wherein the annular passage (50) is substantially parallel to and radially outward of the center body (42); and
c. sensing a condition inside the combustor (70) using a sensor (62) located inside the center body (42).

11. The method as in claim 10, further comprising sensing a pressure inside the combustor (70) using the sensor (62) located inside the center body (42).

12. The method as in claim 10 or 11, further comprising sensing a flame condition inside the combustor (70) using the sensor located inside the center body (42).

13. The method as in any of claims 10 to 12, further comprising flowing a liquid fuel through the center body (42).
